# DEMANDE DE BREVET EUROPEEN

(11) **EP 4 399 965 A1**
(43) Date de publication de la demande: **17.07.2024**
(21) Numéro de dépôt: 23220469.3
(22) Date de dépôt: 28.12.2023
(51) Int. Cl.: A01J 15/00, A23C 15/00, A23C 15/02, A23D 7/00

(54) **PROCÉDÉ DE PRODUCTION D'UN BEURRE TECHNOLOGIQUE**

(30) Priorité: 28.12.2022 BE 202206098
(71) Demandeur: Solarec, 6800 Recogne (BE)
(72) Inventeur: ALVAREZ GUTIERREZ, Arizbeth, 6800 Recogne (BE); GEORGES, Patrick Jean Fernand Gislain, 6800 Recogne (BE); GEORGES, Florent Jean-Paul Eddy, 6800 Recogne (BE); ISERENTANT, Eric Jean Marie Henri, 6800 Recogne (BE); BRÉJARD, Clémentine Jeanne Emma, 6800 Recogne (BE); LERICHE, Stéphan Georges Gislain, 6800 Recogne (BE)
(74) Mandataire: Calysta NV

(57) **Abrégé**

La présente invention se rapporte à un procédé de production d'un beurre technologique, ainsi qu'à un beurre technologique obtenu selon l'invention.

## Description

La présente invention se rapporte à un procédé de production d'un beurre technologique.

La présente invention concerne en outre un beurre technologique obtenu par le procédé selon l'invention.

Le beurre comme produit alimentaire trouve son origine avec la domestication et l'élevage des animaux laitiers, et plus particulièrement sa fabrication viendrait de l'utilisation d'une jarre qui aurait servi de baratte afin de battre la crème du lait pour la transformer en beurre.

Dès lors, autant le beurre que son procédé de fabrication n'ont cessé d'être améliorés, notamment pour augmenter sa durée de vie, sa conservation, son transport, son goût mais également ses propriétés nutritionnelles. Par exemple, la découverte de la pasteurisation et son application au beurre a permis d'offrir une nouvelle méthode de conservation du lait et de la crème garantissant salubrité, qualité et saveur, de même que l'écrémeuse centrifugeuse a permis de considérablement réduire la durée d'écrémage, entraînant une production de beurre plus rapide et de meilleure qualité notamment au vu de la fraîcheur du produit.

La production industrielle de beurre s'étant très largement développée avec le développement du butyrateur qui transforme la crème en beurre par un barattage en continu.

De nos jours, les consommateurs ne sont plus nécessairement demandeurs seulement de beurre « traditionnel » mais recherchent au contraire toujours plus de solutions alternatives.

Ainsi, l'industrie agro-alimentaire, en plus d'améliorer les procédés de production de beurre « traditionnel », ont également développé des procédés de fabrication de nouveaux produits comme par exemple :
- le beurre cru ou de baratte obtenu à partir de crème crue non pasteurisée,
- le beurre fin ou extra-fin contenant 82% de matière grasse à partir de crème pasteurisée et dont la fabrication doit avoir lieu dans les 72 heures après la collecte du lait,
- le beurre tartinable qui contient également 82% de matière grasse et fabriqué à partir d'une crème pasteurisée mais pour lequel le procédé de fabrication a été adapté afin de gagner en souplesse et tendreté (fonte et refroidissement lent et contrôlé),
- le beurre allégé, le demi beurre et le beurre à faible teneur en matière grasse qui sont obtenus à partir de crème allégée et pasteurisée et qui comprennent respectivement entre 60 et 65%, entre 41 et 60% et enfin entre 39 et 41 % de matière grasse,
- le beurre salé ou demi-sel qui contiennent respectivement plus de 3g de sel/100g ou entre 0,8 et 3g de sel/100g de beurre,
- le beurre fouetté pour lequel de l'air est introduit au moment du barattage afin de donner plus de volume au produit fini,
- le beurre aromatisé pour lequel des additifs sont ajoutés (ail, herbes, épices),
- le beurre de culture fabriqué à partir de crème dans laquelle une culture bactérienne a été ajoutée avant le barattage,
- le beurre technologique.

On comprend donc aisément que l'industrie agro-alimentaire, afin de répondre aux exigences et attentes des consommateurs, doit constamment améliorer le procédé de fabrication historique du beurre.

En revanche, bien que ce procédé de fabrication historique du beurre s'est considérablement accéléré et modernisé au cours du temps, la base de ce procédé reste globalement inchangée depuis de nombreuses années, à savoir cinq étapes essentielles qui sont :
- une étape de collecte du lait et une éventuelle pasteurisation.
- une étape d'écrémage au cours de laquelle la crème est recueillie,
- une étape de maturation, physique ou biologique, de la crème qui donnera son goût au beurre,
- une étape de barattage qui permet de transformer la crème en beurre et enfin,
- une étape de malaxage ou de mise en forme pour donner sa forme et sa texture au beurre.

A l'issu de la fabrication, un beurre est obtenu avec une appellation qui diffère en fonction du type de crème de départ, de son taux de matière grasse ou encore de la présence de sel.

En outre, la durée entre l'étape de collecte du lait et l'étape d'écrémage doit être généralement inférieure à 3 jours, de préférence inférieure à 2 jours et de manière encore plus préférée la fabrication du beurre doit avoir lieu le même jour que la traite.

L'étape de pasteurisation, quant à elle, est généralement effectuée à minimum 72°C pendant minimum 15 secondes, avant que le lait soit immédiatement refroidi pour tuer les bactéries et germes nuisibles au goût et à la conservation du beurre.

Lors du barattage, la crème est agitée afin de libérer et d'agglomérer les matières grasses, permettant d'obtenir des grains de beurre qui seront ensuite à nouveau malaxés pour accroître leur agglomération puis mise en forme pour obtenir le beurre.

On comprend bien que, bien qu'il soit un produit largement présent sur le marché, le beurre fait toujours l'objet d'améliorations, de développements et d'innovations.

Cela est d'autant plus vrai lorsqu'on considère le beurre technologique.

En effet, pour les artisans et industrielles dans le secteur de la viennoiserie, le beurre est un ingrédient clé. Pour les recettes de pâtes feuilletées levées servant à la fabrication par exemple des croissants, pains au chocolats ou autre pains aux raisins, la teneur en beurre se situe généralement entre 20 et 35%.

La préparation de telles pâtes feuilletées consiste globalement à préparer une pâte dans laquelle s'alternent des couches de pâte boulangère séparées par des couches de beurre, cette structure est pliée de nombreuses fois puis laminée. Cela permettant d'obtenir après cuisson une structure feuilletée bien alvéolée et développée.

Pour ce faire, il est important que le beurre se maintienne en couches continues et homogènes, et qu'il ne se mélange pas à la pâte boulangère. Ces couches de beurre, continues et homogènes permettent d'effectuer une barrière vis-à-vis des gaz au cours de la pousse et de la cuisson du produit, permettant au produit de gonfler et de lui donner la structure, texture, feuilletage et aspect souhaité.

Malheureusement, les beurres considérés comme traditionnels présentent généralement des défauts d'exsudation de phase aqueuse lors des opérations d'extrusion et présentent une plasticité qui n'est pas optimale pouvant conduire à des rétractations des pâtes feuilletées, ce qui n'est évidemment pas souhaitable. En outre, les blocs de beurre peuvent également se rompre ou encore présenter des déchirures qui rendent le produit final non homogène.

La préparation de beurre appelé technologique a permis d'apporter des solutions aux difficultés du feuilletage, en facilitant la préparation de telles pâtes, en améliorant le développement du feuilletage au cours de la cuisson et en renforçant la sensation et le goût de gras recherché à la dégustation par les consommateurs.

Le beurre technologique conserve la composition conventionnelle du beurre, en revanche le procédé de préparation d'un tel beurre permet de modifier la cristallisation des triglycérides et de modifier la répartition de la phase aqueuse au sein du beurre cristallisé, ce qui permet de donner au beurre technologique une dureté, plasticité, stabilité et texture particulières et recherchées.

Ainsi, pour la cristallisation du beurre technologique, une étape de refroidissement a lieu dans des échangeurs à surface raclée, en plusieurs étapes, permettant de contrôler la température de refroidissement, via l'action mécanique de brassage ainsi que le cisaillement. Cela permettant de générer un beurre technologique dans lequel la taille des cristaux de matière grasse est contrôlée et qui sont répartis de manière homogène dans la masse du beurre, pour qu'après lamination, la pâte feuilletée soit elle-même homogène et qu'elle présente un bon développement en cours de cuisson.

On connaît de l'art antérieur le document RU2226058 qui divulgue une méthode de production de beurre à partir d'une crème à haute teneur en matière grasse, mettant en oeuvre une pasteurisation entre 85°C et 90°C puis une mise sous vide, ce qui permet d'avoir un refroidissement uniforme des gouttelettes de crème, entraînant une diminution de la teneur en eau du produit fini (8 - 11%) et donc selon ce document une amélioration des qualités du beurre, à savoir une teneur en matière grasse de 89 à 92% avec une durée de conservation augmentée.

On connaît également le document EP0385542 qui quant à lui décrit un procédé de production de beurre dans lequel le lait est stocké dans un réservoir de stockage à 5°C, qui alimente une écrémeuse à centrifugation en passant par un échangeur à plaque à 55°C, la crème est ensuite introduite dans un pasteurisateur à 85°C puis refroidie à 25°C pour être chargée dans un récipient à fermentation. La crème est inoculée avec une culture pour une étape de fermentation pendant 16 à 18 heures, pour ensuite être mélangée avec une phase aqueuse, subir une deuxième étape de pasteurisation à 85°C et de refroidissement à 13°C, le mélange final passe par deux unités refroidissantes respectivement à des températures de sortie de 21 °C et 14°C pour ensuite être conditionné.

Bien que les procédés de production de beurre divulgués dans ces documents présentent certains avantages, ils gagneraient à être améliorés.

En effet, il s'avère que les procédés de production de beurre selon l'état de la technique ne sont pas réellement adaptés et optimisés pour la production de beurre technologique. D'autant plus lorsqu'on sait que la nourriture des animaux influence fortement la composition en acides gras du lait et donc les beurres produits ultérieurement n'ont pas la même texture s'il s'agit de beurre de printemps ou de beurre d'hiver qui ont des points de fusion différents.

En outre, on comprend également que l'augmentation constante des coûts des matières premières et des coûts de l'énergie fait perdre en rendement pour le producteur. De plus, l'empreinte carbone et les considérations écologiques sont aujourd'hui des points d'attention autant pour les consommateurs que pour les industriels qui recherchent de nouvelles solutions les plus neutres possible ou à tout le moins à réduire leur empreinte environnementale.

Il existe donc un réel besoin de fournir un procédé de production de beurre qui soit adapté, optimisé et uniformisé à la production de beurre technologique, qui gagne en productivité et en rendement, tout en prenant en compte l'impact carbone et environnemental.

La présente invention a pour but de pallier les inconvénients de l'état de la technique en procurant un procédé de production d'un beurre technologique comprenant :
- une étape de barattage continu d'une crème maturée dans un butyrateur pour former de la pâte de beurre de butyrateur,
caractérisé en ce que le procédé comprend une étape de fonte progressive de la pâte de beurre de butyrateur dans un échangeur à plaques jusqu'à une cuve de conservation recueillant le beurre de butyrateur fondu ou une étape d'alimentation de la cuve de conservation avec un mélange de beurre et/ou de stéarines et/ou d'eau,
- une étape de pasteurisation du beurre de butyrateur fondu ou du mélange de beurre et/ou de stéarines et/ou d'eau, à une température supérieure à 72°C,
- une étape de refroidissement du beurre pasteurisé par un passage dans une série de cylindres comprenant des racleurs pour former un beurre cristallisé,
- une étape de passage du beurre cristallisé dans un tube de repos comprenant un filtre pour former un beurre technologique présentant une composition en matière grasse comprise entre 82 et 89%, en eau comprise entre 9 et 16%, et éventuellement en stéarines comprise entre 0 et 70%,
- une étape de mise en forme du beurre technologique,
- une étape de conditionnement du beurre technologique.

Il est apparu de manière particulièrement avantageuse que fournir un procédé de production de beurre technologique dans lequel la matière de départ est un beurre de butyrateur formé à partir d'une crème maturée permettait de réduire considérablement l'empreinte carbone et écologique de l'étape de récolte du lait entier auprès des agriculteurs. En effet, bien qu'il soit conseillé de récolter le lait le jour de traite, ce qui revient à effectuer une étape de récolte tous les jours, il est apparu qu'il était possible, selon la présente invention, d'utiliser une crème maturée et donc de repousser ce délai de récolte afin de limiter considérablement les trajets des camions citerne. Ainsi, la présente invention permet de diminuer l'empreinte carbone ainsi que les considérations écologiques en mettant en oeuvre moins d'étapes de transport.

De manière avantageuse, la crème maturée utilisée pour la préparation du beurre de butyrateur subit une étape de pasteurisation à une température supérieure à 72°C, ce qui permet de pouvoir utiliser du lait entier maturé, en évitant les étapes de récolte quotidiennes tout en conservant sa durée de vie conventionnelle et n'entraînant pas de perte de qualité.

En outre, il est apparu de manière particulièrement avantageuse que le procédé selon la présente invention comprenait une étape de fonte progressive de la pâte de beurre de butyrateur dans un échangeur à plaques jusqu'à une cuve de conservation recueillant le beurre de butyrateur fondu. Cela permettant de manière avantageuse d'effacer le profil thermique de la matière de départ utilisée pour la fabrication du beurre technologique selon l'invention.

Selon la présente invention, la combinaison de l'étape de fonte du beurre, avantageusement à une température comprise entre 40 et 55°C, et l'étape de pasteurisation à une température supérieure à 72°C, permet de s'affranchir de la qualité du beurre qui entre dans le procédé selon la présente invention, par exemple la présence de germes, ou une qualité moindre, ou une texture non adéquate, car la combinaison de ces deux étapes permet d'effacer le passé thermique du beurre et de fournir une matière première uniforme et standardisée.

En effet, il s'avère que, tel qu'expliqué ci-avant et selon l'art antérieur, le beurre technologique puisse être obtenu directement à partir de crème, sans passage par une étape de beurre, ou bien à partir de beurre qui va ensuite subir une texturation. Malheureusement, tel qu'également expliqué ci-avant, la crème ou le beurre utilisé présentent des nombreuses différences de composition (en fonction de la composition en acides gras), de texture, de structure, de dureté, en fonction du moment de récolte, du lieu de récolte, de la nourriture servant d'alimentation ou encore de la saison.

Le procédé selon la présente invention, en mettant en oeuvre une étape de fonte et en effaçant le profil thermique de l'ingrédient de départ, permet d'utiliser aussi bien du beurre sortant d'un butyrateur ou un beurre déconditionné, ou encore un mélange de beurre et/ou de stéarines et/ou d'eau, quelque que soit l'ingrédient de départ et sa qualité, par exemple un beurre de butyrateur ayant une qualité moindre ou bien un beurre de butyrateur ayant une bonne qualité pourront tous deux être utilisés pour fabriquer un beurre technologique selon la présente invention. En outre, l'étape de fonte selon la présente invention permet de manière particulièrement avantageuse d'effacer les éventuels problèmes de qualité de l'ingrédient de départ.

Enfin, l'utilisation d'une étape de fonte dans le procédé de la présente invention, permet de standardiser, d'uniformiser l'ingrédient de départ, d'avoir une qualité constante tout au long de l'année, et ainsi de manière avantageuse d'éviter les différences de composition, de texture, de structure, de dureté du matériau de départ (en fonction de la composition en acides gras).

En outre, l'étape de fonte selon la présente invention permet également, et de manière plus économique, une alimentation en continu du procédé selon l'invention en ingrédient de départ.

On comprend donc aisément que le procédé selon la présente invention permet la préparation de beurre technologique en continu, quel que soit le moment de la journée ou de l'année, sans avoir à adapter continuellement une installation industrielle en fonction du moment de la récolte, du lieu de la récolte pour s'adapter à chaque lait, ce qui est évidemment non souhaitable, contraignant et entraîne une perte de rendement, ces inconvénients étant palier par le procédé de l'invention.

Le procédé selon la présente invention met également en oeuvre une étape de pasteurisation du beurre de butyrateur fondu, à une température supérieure à 72°C, permettant d'éliminer les bactéries pathogènes sans entraîner une perte de qualité du produit.

L'étape de refroidissement quant à elle, mise en oeuvre dans un texturateur, c'est-à-dire un échangeur de chaleur à surface raclée, permet de transformer du beurre sous forme liquide en beurre solide, en cristallisant la matière grasse de manière contrôlée et maîtrisée par l'apport de froid et le travail mécanique. Le beurre de butyrateur fondu passe donc d'un structure en état désordonné liquide à une structure en état ordonné solide.

Le procédé selon la présente invention comprend également une étape de passage du beurre cristallisé obtenu, dans un tube de repos comprenant un filtre pour former un beurre technologique. Cela permet d'obtenir un beurre technologique avec une texture homogène et uniforme en finalisant l'étape de cristallisation dans le tube de repos. En effet, bien que le beurre cristallisé soit obtenu en sortie du texturateur, il s'avère que sa structure ne soit pas totalement figée, et le passage par un tube de repos permet de finaliser la cristallisation de manière homogène en évitant que celle-ci se fasse de manière désordonnée dans un frigo de stockage. En outre, le passage dans un tube de repos permet également un post-durcissement du beurre technologique afin de permettre une mise en forme et un conditionnement aisé en évitant que le beurre technologique ne soit trop mou sur les côtés.

Le procédé selon la présente invention permet donc une mise en forme et un conditionnement du beurre technologique obtenu, de manière facilité et aisée.

Ainsi, il est en effet apparu de manière particulièrement avantageuse que le procédé de production de beurre technologique selon la présente invention permet de fournir un procédé qui soit adapté, optimisé et uniformisé à la production de beurre technologique, tout en diminuant l'impact que peut avoir le lait, la crème ou encore le beurre de départ sur le produit fini, cela entraînant un gain de productivité, de rendement et une diminution de l'impact environnemental.

En outre, le procédé de production de beurre technologique selon la présente invention permet de standardiser et d'uniformiser la fabrication de beurre technologique, ce qui lui permet avantageusement d'avoir une qualité constante tout au long de l'année.

De préférence, le procédé selon l'invention comprend en outre une étape de conservation du beurre de butyrateur fondu ou du mélange de beurre et/ou de stéarines et/ou d'eau, dans une cuve de conservation sous agitation, de préférence à une température comprise entre 40 et 55°C.

L'étape de conservation du beurre de butyrateur fondu dans la cuve de conservation sous agitation permet avantageusement de pouvoir standardiser le profil de fusion du beurre, d'effectuer des analyser sur le beurre fondu, sa composition et détecter des potentielles imperfections.

Avantageusement, le procédé selon l'invention comprend une étape d'ajout d'au moins un ingrédient additionnel dans la cuve de conservation.

Par exemple, le au moins un ingrédient additionnel du procédé selon l'invention est choisi dans le groupe comprenant les stéarines, de l'eau, et leurs mélanges.

En effet, en fonction de l'ingrédient de départ, qui peut être de bonne voire de moins bonne qualité, il peut être nécessaire d'effectuer un ajout de stéarines pour augmenter la quantité en matières grasses du beurre fondu et/ou d'ajouter de l'eau afin de rectifier la teneur en eau et respecter la réglementation du beurre qui doit comprendre au maximum 16% d'eau avec 82% de matières grasses.

Les stéarines peuvent être préalablement fondues avant l'injection dans la cuve de conservation, au moyen d'un fondoir.

Cela permettant de manière avantageuse de recevoir le beurre de butyrateur fondu, éventuellement les stéarines et/ou de l'eau dans la cuve de conservation et de mélanger ces ingrédients pour obtenir un mélange homogène de composition contrôlée et standardisée, ce qui permet in fine au beurre technologique fabriqué d'avoir une qualité constante au cours du temps.

De manière préférée, la série de cylindres comprenant des racleurs du procédé selon l'invention comprend un premier cylindre présentant un gradient de température allant de 45°C à 12°C entre une partie en amont du premier cylindre et une partie en aval du premier cylindre.

De manière plus préférée, la série de cylindres comprenant des racleurs du procédé selon la présente invention comprend, successivement au premier cylindre, un deuxième cylindre présentant un gradient de température allant de 15°C à 8°C entre une partie en amont du deuxième cylindre et une partie en aval du deuxième cylindre.

De manière encore plus préférentielle, la série de cylindres comprenant des racleurs du procédé selon la présente invention comprend, successivement au deuxième cylindre, un troisième cylindre présentant un gradient de température allant de 12°C à 6°C entre une partie en amont du troisième cylindre et une partie en aval du troisième cylindre.

En effet, il est apparu que la premier cylindre, le deuxième cylindre et le troisième cylindre, présentant chacun un gradient de température spécifique à savoir respectivement allant environ de 45°C à 12°C, environ de 15°C à 8°C et environ de 12°C à 6°C, permettait de contrôler l'étape de cristallisation pour former du beurre cristallisé présentant les qualités recherchées pour le beurre technologique.

De préférence, le procédé selon l'invention comprend en outre une étape de pré refroidissement du beurre pasteurisé, avant l'étape de refroidissement, ce qui permet de refroidir le beurre pasteurisé avant son entrée dans les tubes de cristallisation/texturateur, afin d'éviter un choc thermique brutal, ce qui permet avantageusement d'obtenir une meilleure cristallisation et plus homogène.

Préférentiellement, le filtre du procédé selon la présente invention est un tamis de taille de maille comprise entre 0,5 mm et 5 mm, préférentiellement entre 0,5 mm et 4 mm, avantageusement entre 0,5 mm et 3 mm, plus particulièrement entre 0,5 mm et 2 mm, de manière préférée entre 1 mm et 2 mm. Cela permettant d'obtenir une texture encore plus homogène avec le passage dans un filtre au début du tube de repos, ainsi qu'une mise en forme et un conditionnement aisé.

Avantageusement, le procédé selon la présente invention comprend en outre une étape de recyclage d'un beurre cristallisé non conforme par une fonte et une réinjection du beurre cristallisé non conforme dans la cuve de conservation.

De manière avantageuse, le procédé selon l'invention comprend en outre une étape de pré refroidissement du beurre cristallisé non conforme fondu avant la réinjection dans la cuve de conservation.

Cela permettant de recycler le beurre technologique obtenu selon la présente invention qui serait non conforme ou qui présenterait certains défauts, en le faisant fondre et en le réinjectant directement dans la cuve de conservation, ce dernier pourra être mélangé à nouveau, uniformisé et standardisé avec le reste du beurre de butyrateur fondu pour à nouveau former un beurre technologique.

D'autres formes de réalisation du procédé de production de beurre technologique selon la présente invention sont indiquées dans les revendications annexées.

L'invention a aussi pour objet un beurre technologique obtenu par le procédé selon la présente invention.

De préférence, le beurre technologique selon l'invention présente un poids compris entre 1 kg et 20 kg.

Préférentiellement, le beurre technologique selon l'invention présente une composition en matière grasse comprise entre 82 et 89%, en eau comprise entre 9 et 16%, et éventuellement en stéarines comprise entre 0 et 70%.

D'autres formes de réalisation du beurre technologique selon la présente invention sont indiquées dans les revendications annexées.

### Brève description des dessins

D'autres caractéristiques, détails et avantages de l'invention ressortiront de la description donnée ci-après, à titre non limitatif et en faisant référence aux dessins et aux exemples.

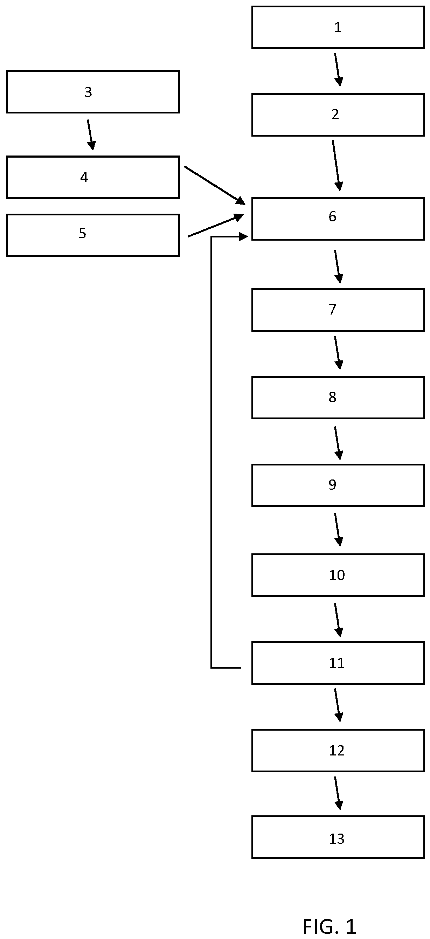

La figure 1 est un diagramme simplifié du procédé de production d'un beurre technologique selon la présente invention.

Sur les figures, les éléments identiques ou analogues portent les mêmes références.

La figure 1 illustre une représentation avantageuse d'un procédé de préparation de beurre technologique selon la présente invention.

Le procédé selon l'invention comprend une étape de barattage continu 1 d'une crème maturée dans un butyrateur afin de former de la pâte de beurre de butyrateur.

La pâte de beurre de butyrateur produite à l'étape 1 est envoyé, à l'aide d'une pompe de circulation, vers un échangeur à plaque 2 pour fondre progressivement la pâte de beurre de butyrateur qui vient du butyrateur jusqu'à une cuve de conservation 6 recueillant le beurre de butyrateur fondu.

Il est également envisagé de procéder à une étape d'alimentation de la cuve de conservation 6 avec du beurre et/ou de stéarines.

La cuve de conservation 6 permet de recevoir le beurre de butyrateur fondu ou du beurre et/ou de stéarines et/ou d'eau, et mélanger les ingrédients afin d'obtenir une répartition homogène, de préférence à une température comprise entre 40 et 55°C.

En effet, il est envisagé selon le procédé de l'invention de pouvoir standardiser le profil de fusion du beurre afin de maîtriser parfaitement sa composition (qui diffère selon la saison) et d'avoir une qualité constante du beurre technologique selon l'invention tout au long de l'année.

Pour ce faire, il est prévu d'ajouter au moins un ingrédient additionnel dans la cuve de conservation 6. Par exemple, des stéarines 3 sont fondues lors d'une étape de fonte 4 avec un fondoir. Les stéarines fondues sont ensuite ajoutées au beurre de butyrateur fondu dans la cuve de conservation 6.

Il est également envisagé de procéder à une étape d'ajout d'eau 5, à la cuve de conservation 6 afin de rectifier la teneur en eau du mélange pour respecter la réglementation du beurre technologique selon l'invention.

Le beurre de butyrateur fondu et/ou le deuxième mélange de beurre de butyrateur fondu avec des stéarines et éventuellement de l'eau, est mélangé sous agitation dans la cuve de conservation 6, idéalement entre 40 et 55°C, puis subit une étape de pasteurisation 7, à une température comprise entre 70°C et 75°C afin d'éliminer les bactéries pathogènes tout en conservant les qualités du beurre de l'invention.

Le beurre de butyrateur fondu et pasteurisé et/ou le mélange pasteurisé subit une étape de pré refroidissement 8, afin d'abaisser sa température et d'éviter un choc thermique brutal avant l'entrée dans les tubes du texturateur 9, permettant une meilleure cristallisation et homogénéité. De préférence, la section de pré refroidissement 8 est située à la fin du pasteurisateur 7.

En effet, le texturateur selon l'invention 9 a pour effet de transformer le beurre de butyrateur fondu et pasteurisé et/ou le mélange pasteurisé, à l'état liquide, en beurre solide.

Il s'agit d'une étape de refroidissement 9 du beurre fondu par un passage dans une série de cylindres comprenant des racleurs, également appelé échangeur de chaleur à surface raclée, pour former un beurre cristallisé.

Plus précisément, le texturateur selon l'invention 9, comprend un premier cylindre présentant un gradient de température allant d'environ 45°C à 12°C entre une partie en amont et une partie en aval du premier cylindre. Le texturateur 9 comprend avantageusement un deuxième cylindre à la suite du premier cylindre, qui présente un gradient de température allant d'environ 15°C à 8°C entre une partie en amont et une partie en aval du deuxième cylindre. Le texturateur 9 comprend plus avantageusement un troisième cylindre, à la suite du deuxième cylindre, qui présente un gradient de température allant d'environ 12°C à 6°C entre une partie en amont et une partie en aval du troisième cylindre, en sortie de texturateur 9.

En effet, cela va permettre de cristalliser la matière grasse du beurre, de manière contrôlée et maîtrisée par l'apport de froid et le travail mécanique des racleurs. Le beurre fondu va donc passer d'un état liquide désordonné, à un état solide ordonné et homogène.

Différents contrôles du beurre et de la qualité du beurre sont effectués au cours du procédé selon l'invention.

De manière avantageuse, le beurre cristallisé formé dans le texturateur 9 subit un contrôle de qualité, s'il s'avère que le beurre cristallisé n'est pas conforme, ou lorsqu'il n'est pas possible de le conditionner, ce dernier est introduit dans un nouvel échangeur à plaque 10 afin d'être fondu puis pré refroidit avant d'être réinjecté en amont du procédé selon l'invention, dans la cuve de conservation 6. Il s'agit donc d'une étape de recyclage 10 du beurre cristallisé non conforme par une fonte, pré refroidissement et un réinjection dans la cuve de conservation 6.

Le beurre cristallisé formé dans le texturateur 9 et conforme du point de vue qualité, va ensuite passer au travers de tube de repos 11 comprenant un filtre au début de ce tube de repos. Cela va permettre au beurre cristallisé de subir une étape d'amélioration de sa texture en finalisant la cristallisation de manière homogène et ordonnée, afin d'éviter que la cristallisation ne se termine de manière désordonnée au réfrigérateur, pour former un beurre technologique. En outre, le passage dans le tube de repos 11 permet d'effectuer un post-durcissement afin de durcir les côtés du beurre et de faciliter le conditionnement.

Enfin, le beurre technologique conforme formé est extrudé et mis en forme 12 sous forme de plaque ou de bloc de beurre technologique.

Le beurre technologique mis en forme lors de l'étape 12, est déposé sur une feuille d'emballage pour le conditionnement 13. Cette étape de conditionnement est particulièrement avantageuse en ce qu'elle comprend l'utilisation de deux pâles commandées par une détection optique permettant d'automatiser la fermeture de l'emballage du beurre technologique selon l'invention par repliement de la feuille d'emballage.

Ainsi le beurre technologique selon l'invention et/ou formé selon le procédé de la présente invention présente un poids compris entre 1 kg et 5 kg sous forme de plaque, plus précisément compris entre 1 kg et 3 kg, par exemple 2 kg sous forme de plaque de beurre technologique.

Le beurre technologique selon l'invention et/ou formé selon le procédé de la présente invention présente un poids compris entre 5 kg et 20 kg sous forme de bloc, par exemple sous forme de bloc de beurre technologique de 5 kg, de 10 kg, de 15 kg, de 20 kg.

Le beurre technologique selon l'invention et/ou formé selon le procédé de la présente invention présente une composition en matière grasse comprise entre 82 et 89%, en eau comprise entre 9 et 16% et éventuellement en stéarines comprise entre 0 et 70%.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de production d'un beurre technologique comprenant :
- une étape de barattage continu (1) d'une crème maturée dans un butyrateur pour former de la pâte de beurre de butyrateur,
**caractérisé en ce que** ledit procédé comprend une étape de fonte progressive (2) de la pâte de beurre de butyrateur dans un échangeur à plaques jusqu'à une cuve de conservation (6) recueillant le beurre de butyrateur fondu ou une étape d'alimentation de la cuve de conservation (6) avec un mélange de beurre et/ou de stéarines et/ou d'eau,
- une étape de pasteurisation (7) du beurre de butyrateur fondu ou du mélange de beurre et/ou de stéarines et/ou d'eau, à une température supérieure à 72°C,
- une étape de de refroidissement (9) du beurre pasteurisé par un passage dans une série de cylindres comprenant des racleurs pour former un beurre cristallisé,
- une étape de passage du beurre cristallisé dans un tube de repos (11) comprenant un filtre pour former un beurre technologique présentant une composition en matière grasse comprise entre 82 et 89%, en eau comprise entre 9 et 16%, et éventuellement en stéarines comprise entre 0 et 70%,
- une étape de mise en forme (12) du beurre technologique,
- une étape de conditionnement (13) du beurre technologique.

2. Procédé selon la revendication 1, comprenant en outre une étape de conservation du beurre de butyrateur fondu ou du mélange de beurre et/ou de stéarines et/ou d'eau, dans une cuve de conservation (6) sous agitation, de préférence à une température comprise entre 40 et 55°C.

3. Procédé selon la revendication 1 ou 2, comprenant une étape d'ajout (4, 5) d'au moins un ingrédient additionnel dans la cuve de conservation (6).

4. Procédé selon la revendication 3, dans lequel ledit au moins un ingrédient additionnel est choisi dans le groupe comprenant les stéarines (3), de l'eau (5), et leurs mélanges.

5. Procédé selon l'une quelconque des revendications 1 à 4, dans lequel la série de cylindres comprenant des racleurs comprend un premier cylindre présentant un gradient de température allant de 45°C à 12°C entre une partie en amont du premier cylindre et une partie en aval du premier cylindre.

6. Procédé selon la revendication 5, dans lequel la série de cylindres comprenant des racleurs comprend, successivement au premier cylindre, un deuxième cylindre présentant un gradient de température allant de 15°C à 8°C entre une partie en amont du deuxième cylindre et une partie en aval du deuxième cylindre.

7. Procédé selon la revendication 6, dans lequel la série de cylindres comprenant des racleurs comprend, successivement au deuxième cylindre, un troisième cylindre présentant un gradient de température allant de 12°C à 6°C entre une partie en amont du troisième cylindre et une partie en aval du troisième cylindre.

8. Procédé selon l'une quelconque des revendications 1 à 7, comprenant en outre une étape de pré refroidissement (8) du beurre pasteurisé, avant l'étape de refroidissement (9).

9. Procédé selon l'une quelconque des revendications 1 à 8, dans lequel le filtre est un tamis de taille de maille comprise entre 0,5 mm et 5 mm, préférentiellement entre 0,5 mm et 4 mm, avantageusement entre 0,5 mm et 3 mm, plus particulièrement entre 0,5 mm et 2 mm, de manière préférée entre 1 mm et 2 mm.

10. Procédé selon l'une quelconque des revendications précédentes, comprenant en outre une étape de recyclage (10) d'un beurre cristallisé non conforme par une fonte et une réinjection du beurre cristallisé non conforme dans la cuve de conservation (6).

11. Procédé selon la revendication 10, comprenant en outre une étape de pré refroidissement du beurre cristallisé non conforme fondu avant la réinjection dans la cuve de conservation.

12. Beurre technologique obtenu par le procédé selon l'une quelconque des revendications 1 à 11.

13. Beurre technologique selon la revendication 12 présentant un poids compris entre 1 kg et 20 kg.

14. Beurre technologique selon la revendication 12 ou 13, présentant une composition en matière grasse comprise entre 82 et 89%, en eau comprise entre 9 et 16%, et éventuellement en stéarines comprise entre 0 et 70%.
